# EUROPEAN PATENT APPLICATION

(11) **EP 2 314 157 A2**
(43) Date of publication of application: **27.04.2011**
(21) Application number: 10154942.6
(22) Date of filing: 26.02.2010
(51) Int. Cl.: A01K 63/00

(54) **Display case**

(30) Priority: 27.02.2009 GB 0903381; 04.12.2009 GB 0921296
(71) Applicant: T42 (UK) Limited, Coventry West Midlands CV4 8GN (GB)
(72) Inventor: Thurston-Thorpe, Jevon, Coventry, West Midlands CV4 8GN (GB)
(74) Representative: Tranter, Andrew David

(57) **Abstract**

An apparatus comprising a display case and a fish tank, the fish tank defining a volume into which water is filled to a water level, the display case being of a suitable size to fit at least partially inside of the fish tank, in which the display case has an open end and a closed end, the open end being located below the water level within the tank with the closed end positioned above the water level of the fish tank with the open end providing a fluid connection between water inside of the case and water in the tank outside of the case, and in which the case contains water at a second water level higher than the water level of the tank, the water being maintained at this higher level by atmospheric pressure acting upon the surface of the water in the tank that is outside of the case. The display case may initially be immersed completely underwater in the fish tank before being raised to its final position full of water. A lifting collar may be provided to assist in raising the display case, and an optional support device may be provided for securing the raised display case in position. The display case may be used to display fish which can swim into the display case above the level of the water in the fish tank.

## Description

The present invention relates in general to a display case and more particularly to a display case for a fish tank. It also relates to a combination of a fish tank and a display case.

While the present display case is best used in fish tanks or aquariums, use may be found in other containers such as terrariums, or as a stand-alone decoration. Since the preferred use is for inside fish tanks, the following description will be given using a fish tank as an example. Also for the avoidance of doubt it is to be understood that the term fish tank includes both indoor tanks and outdoor ponds or other bodies of water within its scope.

It is common practice for those who enjoy tropical, fresh or saltwater fish, or other aquatic life to provide a habitat within a transparent "fish tank." It is also common that the fish tank be supplied with various decorations to improve visual aesthetics and to lend some measure of variety and habitat for the animals in the tank.

Fish tank decoration and ornamentation conventionally is in the form of objects which have a base point for attachment or placement in the aquarium which is adapted for positioning at the bottom of the aquarium. Usually, gravel or rock material is used to keep the ornamentation in place. Popular fish tank ornamentation consists of natural structures such as rocks, driftwood, shells and plants. Fish tank decoration may also take the form of representative ornamentation such as treasure chests, shipwrecks, divers and similar objects generally found or associated with under water locations. These forms of ornamentation are consistently made so that they remain at the bottom of the aquarium or fish tank. Due to distortion caused by the refractive index of the water, and also reflection of light from the surface, it can be difficult to see fish clearly which detracts from the enjoyment of keeping the fish.

Any discussion of documents, acts or knowledge in this specification is included to explain the context of the invention. It should not be taken as an admission that any of the material forms part of the prior art base or the common general knowledge in the relevant art.

According to a first aspect, the present invention provides an apparatus comprising optionally a fish tank, and a display case for use in combination with the fish tank, the fish tank defining a volume into which water is filled to a water level, the display case being of a suitable size to fit at least partially inside of the fish tank, in which the display case has an open end and a closed end, the open end being located below the water level within the tank with the closed end positioned above the water level of the fish tank with the open end providing a fluid connection between water inside of the case and water in the tank outside of the case, and in which the case contains water at a second water level higher than the water level of the tank, the water being maintained at this higher level by atmospheric pressure acting upon the surface of the water in the tank that is outside of the case.

The invention therefore provides a display case which is located within a fish tank and which in effect extends the fish tank displayable area to an area which is above the general fish tank water level. This provides an arrangement in which fish that swim into the raised area of water can easily be seen through the case, increasing the enjoyment of keeping of fish. The water is held at this higher level by atmospheric pressure acting on the water in the tank in the manner of a barometer, such that a pressure gradient is formed in the water retained in the display case which is sufficiently large to support the weight of water contained in the volume above the tank water level, giving the effect of an impossible illusion at first appearance.

The water level inside the tank may be adjusted so long as there is a sufficient pressure gradient between the surface of the water in the display case and the open end of the display case to support the weight of water within the case.

The tank may be provided with a water level guide which comprises at least one marking, or identifiable portion that may be designated as water level guide, which is positioned such that when upright in the tank it indicates the minimum level to which the tank should be filled with water so that the volume of water in the tank plus the maximum volume of water that can be held in the display case does not exceed the capacity of the tank

The case may be sized so that it fits entirely below the water level of the tank in a first, installation, position, and can be moved to its position of use filled with water without the open end coming out of the water. This ensures that no air enters the case as it is righted. Of course, this relies on the case having no other openings through which air can enter that are above the water level. Also the water level in the tank will drop as the case is righted, so the opening should be sized to remain below this lowered water level at all times, otherwise the water will not be supported in the case as air will rush into the case. As long as these requirements are achieved the case can be any of a wide variety of shapes and sizes, for example it may be tubular, spherical (in which an opening would be provided below the tank waterline and the closed end would be considered as that above the waterline), or dome shaped.

In an alternative the display case may be initially installed in the fish tan so it is part under water and part above the water, the underwater part having an opening which allows water from the tank to enter the display case and the part above the water being in fluid communication with the part under water but airtight, and a tube may be located within the display case having a first end at the top of the display case and a second end connected to a source of below atmospheric pressure so as to evacuate air from the display case to cause the water in the fish tank to fill the part of the display case that is above the water. The source of below atmospheric pressure may be a pump, although the air could be sucked out manually through the tube.

The tube may be part of the display case, or a tube fixed to the case, or removable from the case. It may simply be a length of tubing that can be inserted inside the display case. Once the water reaches the top it may be removed or left in situ.

The display case may be provided with a water level guide which comprises at least one marking, or identifiable portion that may be designated as water level guide, which is positioned such that during lifting of the case to its final position it indicates the minimum level of water that must be maintained in the fish tank to prevent air entering the tower as it is lifted. Air will enter if any opening at its open end protrudes above the tank water level, so this guide may be located a small distance above that level, perhaps 10mm above.

The case may comprise an elongate tube, perhaps of square or circular cross section along its length which is normally positioned vertically so that it is taller than it is wide, raising the water in the tube well above the water level of the tank. The case may have a length that is at least 50 percent greater than the depth of the water in the tank at the water level, or at least twice as great, or three times as great or more.

The fish tank may also be elongate with the tube almost as long as the tank when resting on its side within the tank in its first, installation, position. Preferably when in this position the display case fits inside the tank wholly below the water level of the tank.

The base of the tank may be provided with one or more locating recesses that correspond with one or more protrusions on the display case to locate the case in position. Alternatively or additionally the base may include one or more locating ridges. In use, these recesses or ridges may assist in locating the open end of the display case as it is pivoted from a position below the water to an upright position in use. The ridges or recesses may therefore co-operate with the case to form a pivot.

In use an edge of the base of the display case may act as a pivot. A non slip surface (i.e. Rubber coated or arissed edge) could be applied to the pivoting edge of the tower.

Alternatively the display case may include an integrated hinge that the tower locates relative to the base of the fish tank. This provides a fixed pivot point and eases the method of raising the tower.

The display case may be so constructed that when it is lying in the tank prior to being moved to the upright position its uppermost face is slanted so the free end of the case is higher than the closed end to permit any air in the case to escape.

Filling a perfectly horizontal vessel underwater can result in trapped air bubbles underneath its uppermost surface, which would result in the tower not being completely full of water.

The slanting upper face may be achieved by providing a protruding leading edge of the Tower's base which lifts one end high than the other, and/or providing a tower with one or more of its sides tapered outward towards its open end

The fish tank may be provided with at least one pair of notches, one each side of the tank, into which a support device can be located, the support device supporting the display case in a partially erect position. The notches may be provided as parts of a rim cover which may fit over an upper rim of the tank include the notches, or the notches may be provided in the walls of the tank itself. The notches may be located above or below the top edge of the tank.

The apparatus may therefore include a support device which is shaped to locate within the notches. It may comprise a generally U-shaped rod, the free ends of which engage the notches, the form of the U matching the form of the display case so the case sits within the U shape.

A lid may be provided which may comprise one or more infill panels that extend across the top of the tank. Where a rim cover is provided, this may include a ridge on which the infill can be supported. The notches, where provided, may cut into this ridge which gives an additional advantage in that the notches create an air-gap allowing the air to pass straight through to the water.

One or more infill pieces may be provided which together with the support collar form a lid for the tank.

The display case may further comprise a guide means which fixes the case in its position of use relative to the tank, helping to reduce the risk of it being knocked over, or removing that risk completely.

The guide means may comprise guide elements releasably attached across the fish tank to further maintain the at least one display case in a fixed position. The guide elements may be formed as part of the display case.

In one arrangement the guide means may comprise a lid for the fish tank which is provided with an opening that is complementary in shape to the cross section of the display case allowing part of the case to extend through the opening in the lid. As such the guide means will form a support collar. This part may be a part that is filled with water, allowing the fish to swim up above the lid. This gives the benefit of providing an assembly in which the fish can be carefully viewed against the backdrop of the lid. This may make it easier to view the fish to check its health for instance.

The support collar may be separate from, or part of, the tower. It may include lugs which engage respective notches in the tank or a rim cover which fits securely around the upper open rim of the tank.

The guide means helps stabilise the tower. Another feature that may be provided to help support the tower is a flat end plate on the base of the tower which, in use, engages a flat part of the base of the tank whereby to create surface tension when immersed within water, restricting any vertical movement of the tower.

This flat end plate may be oversized, by which we mean it is wider than the part of the tower that contains the water to increase stability of the tower. The base may be oversized by including one or more protruding outer edges.

The guide means may be produced as a single clear moulding, a single clear surface with two adjoining locator strips, a single clear moulding that allows the Lid Inserts to butt-up directly next to the tower, by having two sides that drop below the inserts giving the impression of a continuous glass surface.

The display case may further comprise a flotation element placed adjacent to the open end of the display case to aid in the flotation of the display case. The flotation element may be either detachably connected to the display case or formed as part of the display case. This flotation element may provide enough buoyancy to raise part of the case containing water above the water level of the tank.

To enable the fish in the display case to be viewed above the water level of the tank, at least part of the case at or near the closed end which in its position of use is above the water level in the tank may be transparent. Alternatively, the whole display case may be transparent. The display case may be completely rigid and for instance, be constructed at least in part from glass or plastic. The display case may be moulded by any low cost forming or mass production moulding technique.

An area adjacent the open end of the display case may consist of at least one opening large enough to permit fish to swim through to access the display case. To encourage this, more than one opening may be provided at the open end of the case which are accessible when the case is in its position of use by fish. For instance, where the case is tubular, holes or cut-outs may be provided in the sides of the tube below the water level.

The display case may have two openings at the end that lies under water, with one extending further towards the closed upper end of the case than the other. The one that does not extend as far, hereinafter referred to as a smaller opening, may be located on the opposite face of the display case to the face which is closest to the base of the fish tank prior to raising the case. The face of the tower that faces upward as the tower is pivoted features the smaller opening as this is the face that comes closest to breaking the surface of the water during lifting. By adopting this process the lower opening can be much larger, maximising easy entry for the fish

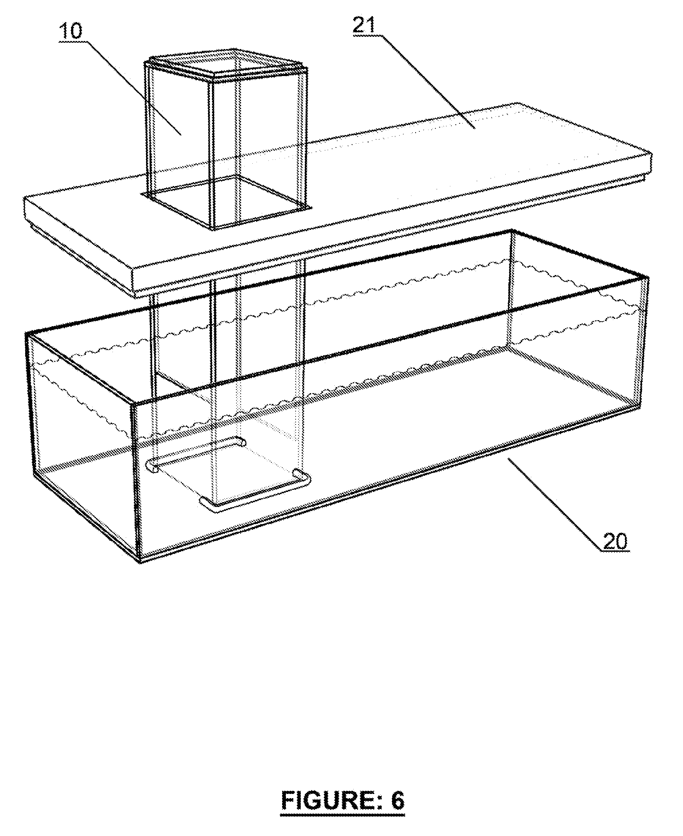

Alternatively a sealing cap could be inserted into the uppermost tower opening (Fig 6b) at the point that the water level reaches the top plane of the tower in its horizontal position. This is then removed via a pull cord when the tower is in its upright position - avoiding getting the users hands wet

A stowage unit may be provided which fits within the fish tank with the display case in place, within which items for cleaning the tank may be located.

To help raise the case to the upright position, a lifting collar may be provide which comprises a collar part defining a loop, which may be a closed loop, having an opening which can be fitted over the tower, and a handle portion extending from the collar.

The need to immerse one vessel completely within water before manually raising it above the water would ordinarily means manual handling of wet items - which could easily be dropped resulting in damage and splashing the surrounding areas. The assembly of this product can be completed without putting the user's hands in water with the use of the lifting collar. This is placed over the top of the display case before filling water. After the Tank has been filled with water this lifting aide is then used to pull the case upward.

The lifting collar may have an angled handle, and the inward facing wall of the loop may be tapered to go around the display case to ensure a firm, tight grip is always maintained on the display case providing a downward force, preventing the handle from slipping off the top of the tower

In a most preferred arrangement the lifting collar may be provided with a net that is fixed around its open end to the surround part such that the surround part forms the rim of the net and holds it open. This allows the handle to function as fishing net to remove fish or other items from the tank.

The handle may be inclined relative to the loop part so that, on lifting it tends to cause the loop to twist relative to the case causing the edges of the surround to grip the tower.

The lifting collar may be provided separate from the case. Therefore, according to a further aspect the invention provides a lifting collar for use in combination with a display case for a fish tank comprising comprises a collar part defining a loop, which may be a closed loop, having an opening which can be fitted over the tower, and a handle portion extending from the collar. The lifting collar may include any of the aforementioned features, such as a net.

The opening in the surround may be rigid and may have a complimentary shape to the outer shape of the case. Hence, if the case is a tower of constant rectangular cross section, the opening in the handle may also be of rectangular cross section and slightly larger than the tower.

Alternatively, where the case is tubular and the opening comprises an end of the tube, the tube may be raised above the base of the tank by a support to allow fish to access to the opening.

The size of the display case may be determined partly by the size of the fish tank in which the display case is placed and partly by the size of the fish within the fish tank.

A light may be provided at the closed end of the display case, above the water level, to illuminate the water in the case. This may be located within a housing that forms part of the case, or is mounted on the case, and may include a battery to provide a self contained light source.

A support may be provided which supports the case in its position of use. This may be integral with the case, or the case may sit on top of it as a separate item.

The support may be height adjustable to vary the amount by which the closed end of the tank protrudes above the water level of the tank. It may include one or more adjustable legs which extend downwards from the display case.

The legs of the support may comprise screw type height adjustors which pass through threaded openings in a base plate of the support or a part of the display case and extend downwards towards the base of the tank.

As an alternative, each leg may comprise a ram which can be lengthened or shortened by a suitable means, such as a pneumatic drive, may be provided to permit adjustment of height. The height adjustment may be operable by remote control to raise and lower the case.

It is primarily envisaged that the display case may be completely filled with water through the open end by totally submerging it below the water level of the tank on its side to allow air to escape as water enters before moving it to its position of use. Of course, once raised the water in the tank will drop to a lower level. However, it may be possible to fill it by lowering it in an upright position into the tank and allowing water to enter through the open end by opening a port towards the closed end allowing air to escape as the case is filled, the port may then be closed before raising the closed end above the water level. The port may be a one way valve to allow air to escape as the case is filled but then to prevent air entering the case it is moved to its position of use. The port may be a simple opening covered by a removable cap. This is advantageous with larger designs of case in which it may prove difficult to tilt the case, or in which it the shape prevents it from fitting below the water line when placed on its side (e.g. a short yet wide case).

The fish tank may comprise either an indoor tank or an outdoor pond.

According to a second aspect the invention provides a display case which is suitable for use with a fish tank to provide the combination of the first aspect of the invention.

According to a further aspect, the present invention provides a method of providing a display case for a fish tank, the fish tank defining a volume into which water is filled to a water level, the display case being of a suitable size to fit at least partially inside of the fish tank, in which the display case has an open end and a closed end, the method comprising:
at least partially submerging the case below the water level of the tank,
allowing the fish tank to fill with water from the tank;
placing the display case inside the fish tank in an installation position such that the open end is below the water level until water has at least partially filled the case from the water in the tank;
moving the display case to a use position with the open end remaining below the level of water in the tank and the closed end raised above the level of water in the tank such that at least some water in the case is held at a level above the water in the tank by atmospheric pressure acting down on the water in the tank.

The method may comprise submerging the case below the water line on its side, and the moving the case from the installation to the use position by pivoting the case about a region of the base of the tank until it is upright.

Additionally, or alternatively, once filled the case may be raised above the base of the tank after it has been moved to the upright position.

The method may comprise placing the righted case on a support and raising the case by adjusting the position or height of the support.

The method may comprise locating the righted case using a guide means to hold it in place. The guide means may comprise a lid for the tank with an opening and the method may comprise fitting the lid onto the tank such that the case protrudes at least partially through the opening in the lid of the tank.

The method may comprise adding fish to the tank before, during, or after the installation of the display case.

Further features of the present invention are as claimed in the dependent claims.

The various features of novelty which characterise the present invention are pointed out with particularity in the claims annexed to and forming part of this disclosure. For a better understanding of the present invention, its operation, advantages and specific objects attained by its use, reference should be made to the accompanying drawings and descriptive matter in which preferred embodiments of the invention are illustrated and described.
**Figure 1(a)** shows a first embodiment of a display case in combination with a fish tank according to a first aspect of the present invention, with the case in an installed position;
**Figure 1(b)** shows in a different embodiment, the combination of figure 1(a) with a light cap fitted to the end of the display case;
**Figure 2** shows the separate components of an embodiment of the invention;
**Figure 3** shows the first step in the installation of the display case where it is filled with water;
**Figure 4** shows how the display case is pivoted into a vertical position;
**Figure 5** shows the display case located in the ridges on the tank base in the installed vertical position;
**Figure 6** shows the installation of the tank lid which acts as a guide means for the display case;
**Figure 7** shows a separate embodiment where the display case is supported by a floating element;
**Figure 8** shows another embodiment of a display case used in an outdoor pond in accordance with the first aspect of the present invention;
**Figure 9** shows an embodiment for a pneumatic support which raises the display case out of the water;
Figu**re 10** shows how multiple display cases can be used in combination with a fish tank; and
**Figure 11** shows an alternative support stand for supporting the display case.
**Figure 12** a schematic view of a second embodiment of a fish tank and display case in accordance with the present invention;
**Figure 13** is a view showing the case is a lowered position inside the tank prior to filling with water and raising the case to an upright position;
**Figure 14** shows the case being raised partially using a lifting collar after water has been added to the tank;
**Figure 15** is a partial view of part of the assembly of Figure 12 showing the location of a support rod in notches in rim cover,
Figu**re 16** shows the partially raised case after being rested on the support collar to permit more water to be added to the tank;
**Figure 17** is an alternative view of the partially raised case resting on the support;
**Figure 18** is a detail view of part of the apparatus of Figure 12 showing a water level marking on the case;
**Figure 19** shows an alternative arrangement in which a plug is used to fill one opening at the base of the case;
**Figure 20** shows a support collar being lowered into place around the display case when in the fully upright position;
**Figure 21** is a detail view of an optional hinge at the base of the case around which it may pivot during lifting;
**Figure 22** shows the display case resting on the base of the tank prior to lifting with the top surface of the case slanted to permit air to escape;
**Figure 23** is a detail view of a lid infill resting on a ridge in the rim cover of the apparatus of figure 12;
**Figure 24** shows an arrangement in which an additional second display case is provided in the tank;
**Figure 25** illustrates an alternative method of filling the display case with water using a vacuum pump; and

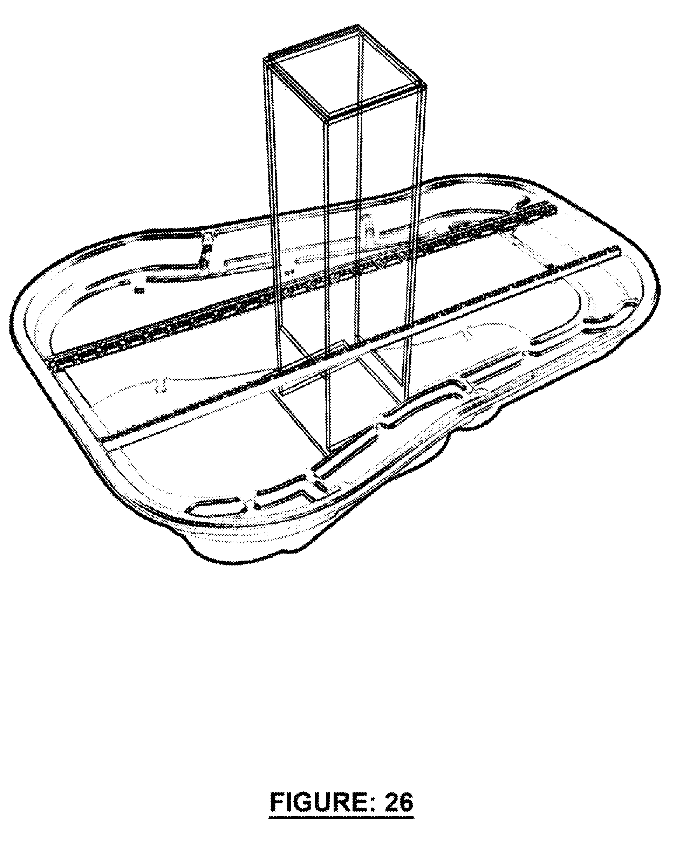

**Figure 26** shows the application of support rails with a support cover to fix a display case in a typical garden pond.

The present invention will be discussed hereinafter in detail in terms of a combination of a fish tank and a display case and method of providing a display case for a fish tank. In the following description, numerous specific details are set forth in order to provide a thorough understanding of the present invention. It will be obvious, however, to those skilled in the art that the present invention may be practiced without these specific details.

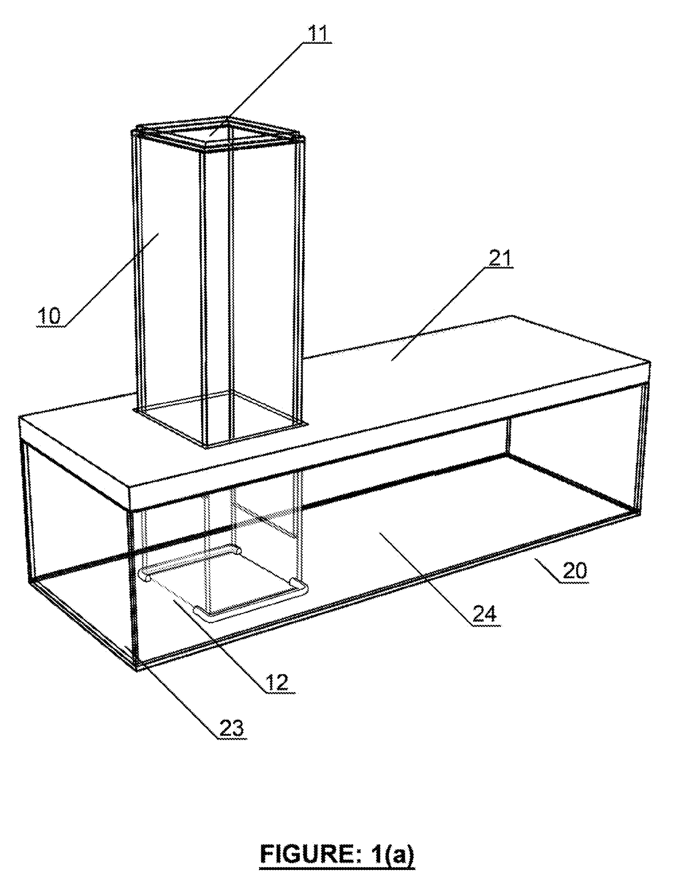

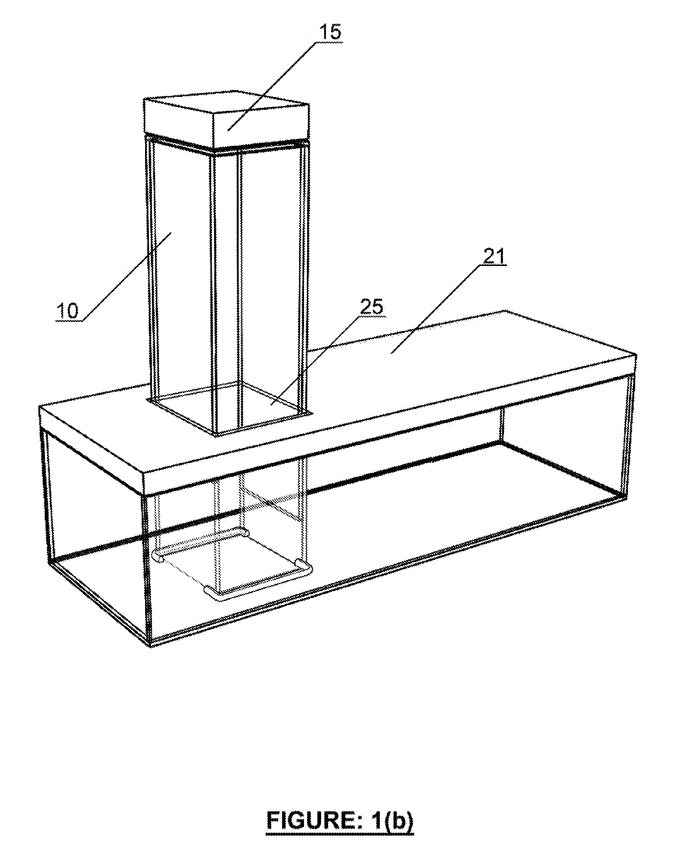

Referring to Figures 1(a) and 1(b) the display case 10 is best used in fish tanks 20 or outdoor ponds or pools, although use may be found in other containers such as terrariums, or as a stand-alone decoration. Since preferred use is in combination with fish tanks 20, the following description will be given using a fish tank 20 as an example.

The fish tank 20 comprises a top 21, a bottom 22, opposing sidewalls 23, a length, a width, and an interior floor 24, the fish tank 20 being filled with water to an appropriate level for the size of the fish tank 20. The size of the fish tank 20, including the depth of the fish tank 20, dictates both the number of display cases 10 which can fit into the fish tank 20 and also the length of the display case 10 which can be used in a fish tank 20. The fish tank 20 can be of any size or shape and also can be an indoor or outdoor tank or pond.

The display case 10 is constructed of a suitable material for use in a fish tank, for example, glass or plastic. Located within the tank, completely below the level of the water in the tank is a tubular display case 10. The display case 10 comprises an elongate tube of rectangular cross section (although other shapes are possible) which has an open end 12 and a closed end 11, the closed end 11 being spaced apart from the open end 12. As shown, the length of the tube is almost equal to the internal length of the fish tank in this example, and the water level is less than half the length of the tube.

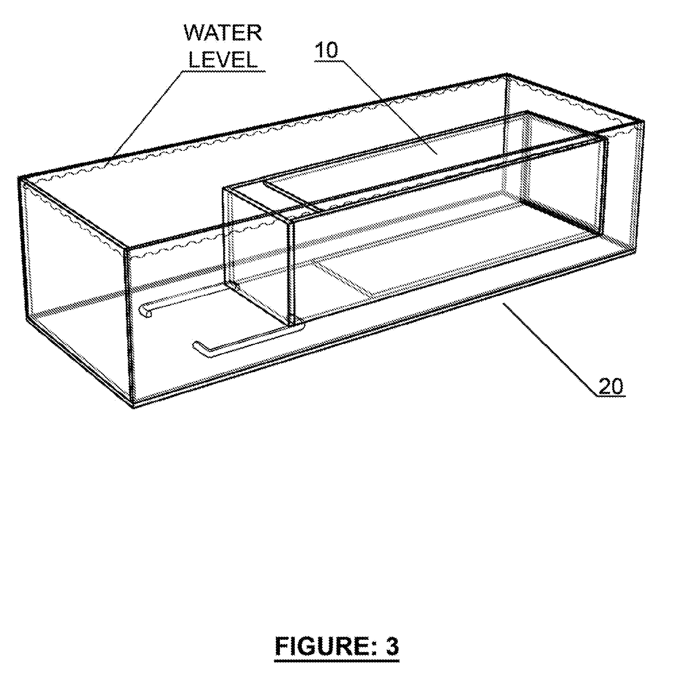

As shown in Figure 3, in use, the display case 10 is first placed into the fish tank 20 to a first, installation, position where it is totally submerged below the water line and allowed to fill with water, expelling air in the case. The display case 10 walls and ends 11, 12 may be transparent or semi-transparent so it is simple to tell when it is filled with water. Obviously, the nature of a fish tank 20 and the display case 10, in that it is visually observed dictates the degree of transparency. Also the size of the fish to be housed or displayed within the display case 10 dictate the physical size of the display case 10 because it is desirable that when in its position of use, fish in the tank can swim within the case.

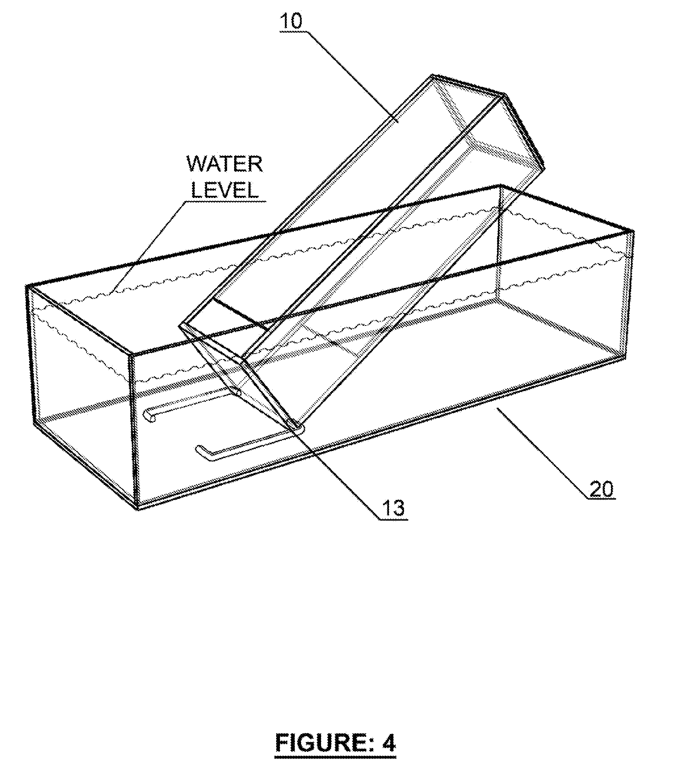

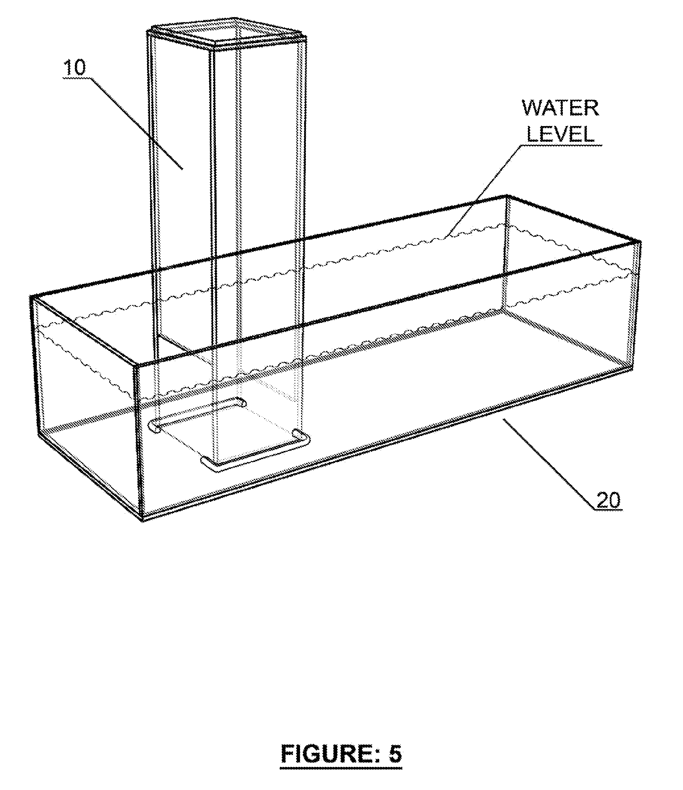

As shown in Figures 4 and 5, once full of water the display case 10 is then moved, or righted, to a position of use. To move to this position it is pivoted about a lower edge 13 until the long axis of the tube is vertical and the tube stands on the bottom of the fish tank. During this movement it is important that the open end 12 of the display case 10 remains located beneath the level of water in the fish tank 20 at all times. Provided this happens, water will remain in the case above the level of water in the tank which will drop (by an amount dependent on the volume of water in the case and the area of the tank). Thus, a volume of water is held up out of the tank, apparently against the laws of physics on first sight. Fish can swim into this volume where they can be viewed easily.

To help the movement of the case to the righted position, the base of the tank is provided with ridges 25 laid out in a square whose outer dimensions complement the inner dimensions of the end of the tube. As the tube is righted, the edge about which it pivots is prevented from slipping by one of the ridges, and when fully righted all four ridges fit inside the tube to prevent it sliding around on the base of the tank.

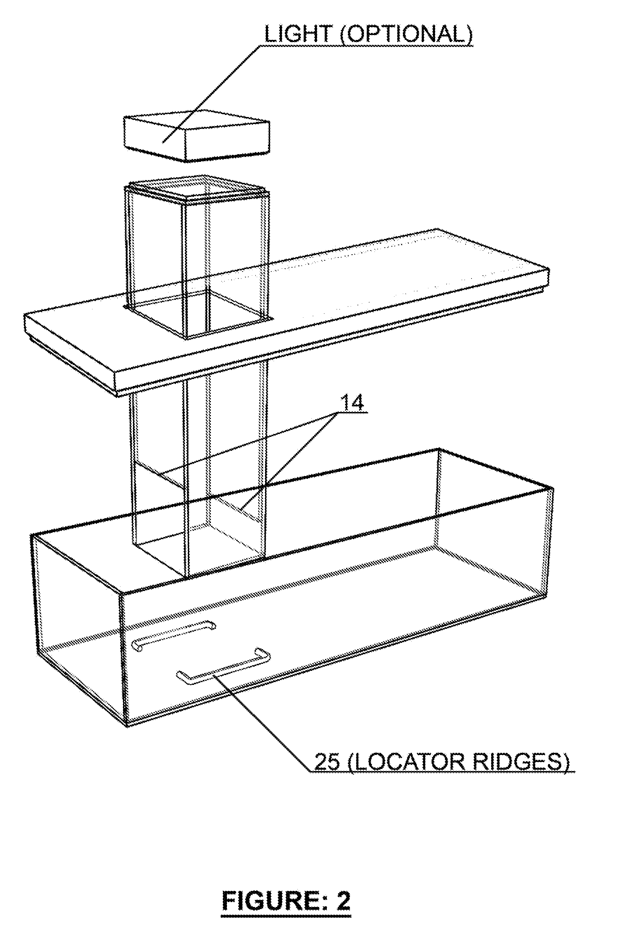

As shown in Figure 2 there are cut-outs 14 in the side walls of the tube which enable water, and fish, to move in and out of the display case when it is in the position of use. The fish can then swim up the tube above the water level in the tank.

Optionally shown in Figure 1(b) is a lid 21 for the tank which includes a cut-out 25 through which the display case 10 protrudes when righted. The cut out is vertically aligned with the ridges on the base of the tank when the lid is fitted. This lid 21 helps ensure the display case cannot easily be knocked over, and further helps locate it in position. The lid also helps prevent debris falling into the tank as it known in the art. It can be fitted easily by lowering it on to the top of the tank over the display case as shown in Figure 6.

Also apparent in Figure 1(b) is a cap 15 which is placed on top of the righted tube. This contains a battery, a drive circuit, and a light source which illuminates the inside of the display case, showcasing any fish inside the case. The light simply clips onto the top of the tube.

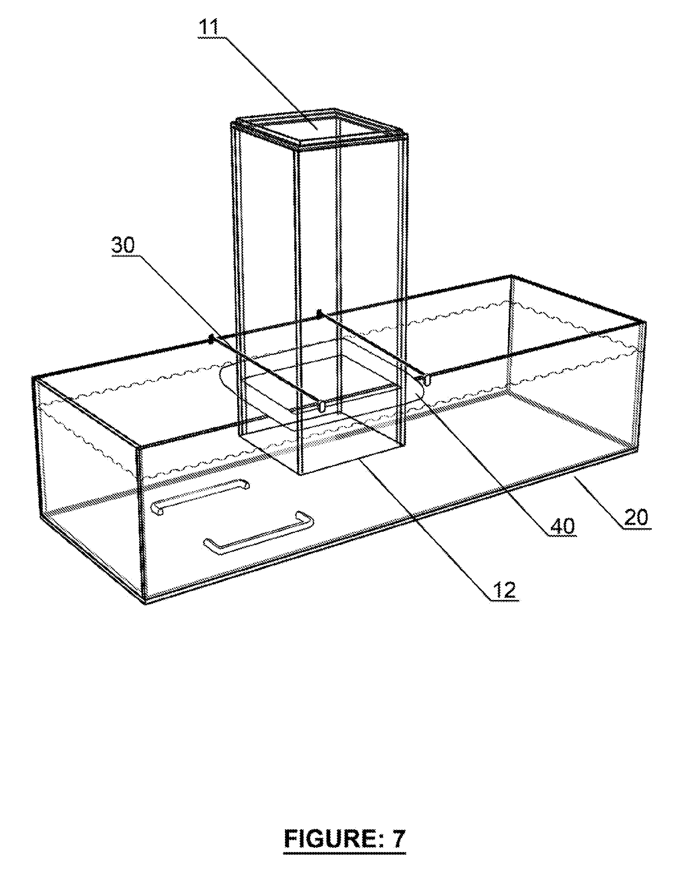

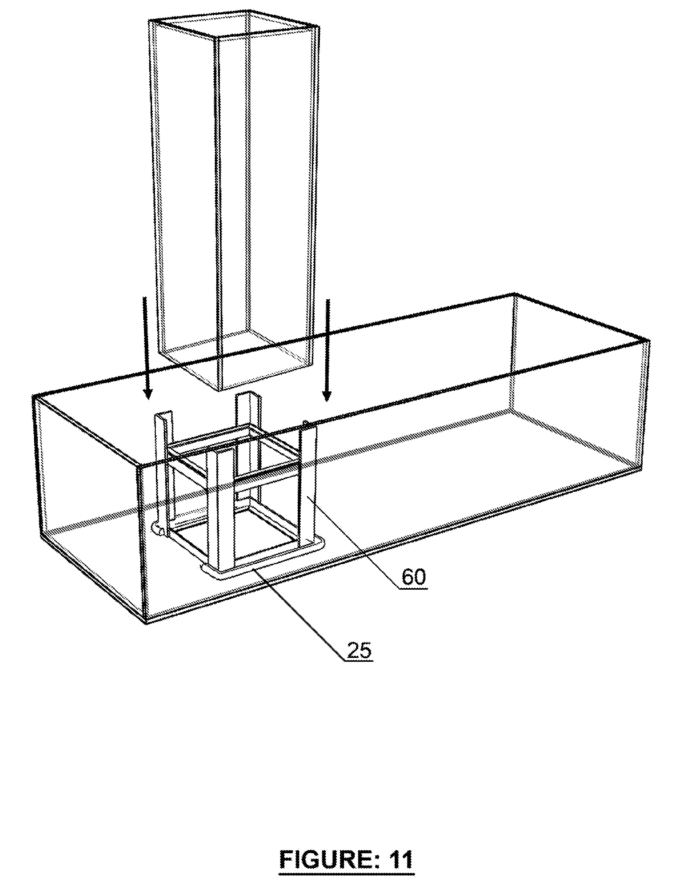

In a modification, shown in Figures 7 and 11, the display case 10 may have a support means 60 or flotation element 40 located adjacent to the open end 12 to position the display case 10 within the fish tank 20 so that the closed end 11 of the display case 10 is located a distance above the water level of the fish tank 20 to enable the fish within the display case 10 to be clearly seen to be floating above the water level of the fish tank 20. Or alternatively, this allows fish within the fish tank 20 to be able to swim up to the water level in the display case 10 thereby creating the vision of fish floating above the fish tank 20 but within the display case 10. As with the first embodiment the case is installed by submerging it to allow it fill with water, before inverting the case and allowing it to rise partially above the water line.

As stated above the display case 10 is not limited to only fish tanks 20, it may be used on any display case 10 which is based on water being retained within the display case 10 through atmospheric pressure.

In order to maintain the display case 10 in a relatively fixed position guide elements 30 are releasably attached or placed across the fish tank An example of such an arrangement is shown in Figure 7 of the accompanying drawings, although it will be appreciated that the lid shown in Figure 1(b) also provides this function and can be considered to be a guide element. Also, the guide elements 30 may form a part of the display case 10 rather than being a separate item. The guide elements 30 may be constructed from any suitable material which allows the guide element 30 to be used in a wet environment. The guide elements 30 may be placed across the fish tank 20 in either direction, the direction being dependent upon were and in which direction the display case 10 is to be viewed.

Also, the display case 10 may further comprise a flotation element 40 placed adjacent to the open end 12 of the display case 10 to aid in the flotation of the display case 10. The flotation element 40 may be constructed from any suitable material, for example, the flotation element 40 may be a rubber ring. The flotation element 40 may be formed as part of the display case 10 or as a separate item detachably connected to the display case 10 at the open end 12 to assist in the flotation and fixing of the display case 10.

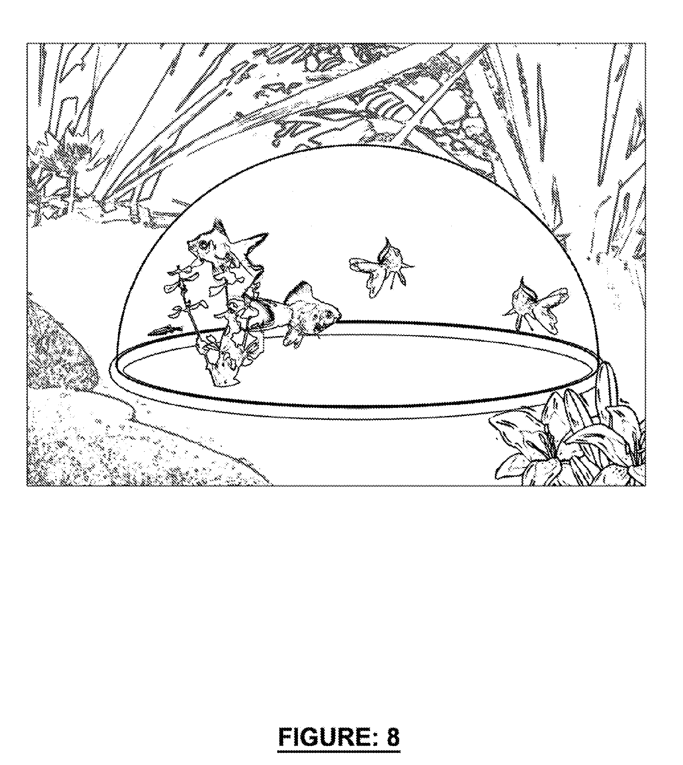

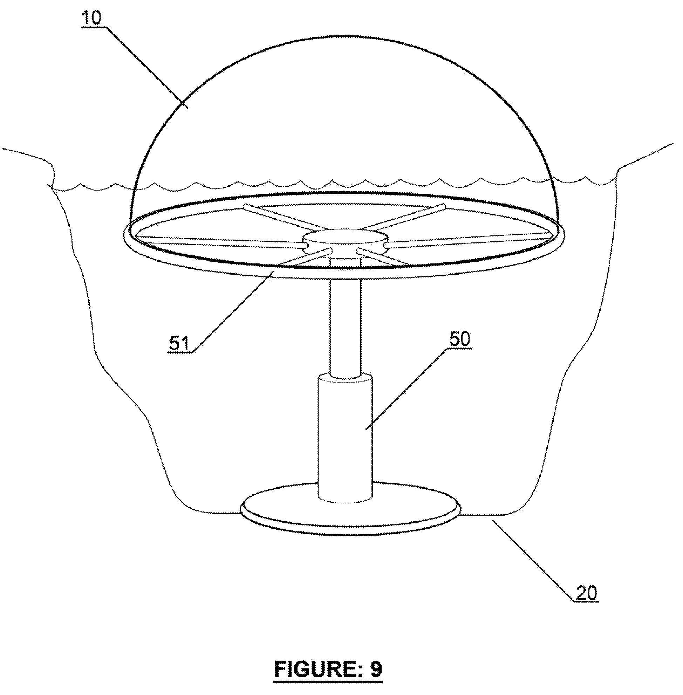

A still further embodiment is shown in Figure 8. It is envisaged that this is most suitable for large display cases such as may be used in an outdoor pond or one a lake. It includes a support which is provided with a set of adjustable legs that allow the righted case to be raised or lowered relative to the water level of the pond or lake. Although not shown in detail the legs may comprises screw type jacks, or may be pneumatic rams 50 as shown in Figure 9. This is beneficial as the weight of the water may be too great for a person to raise without the help of the adjustable legs.

As shown, the legs sit on the base of the pond and support a plate 51 on which the case is placed, but they could also sit on a flotation element allowing the case to float in the pond. Also, the legs could be made integral to the case.

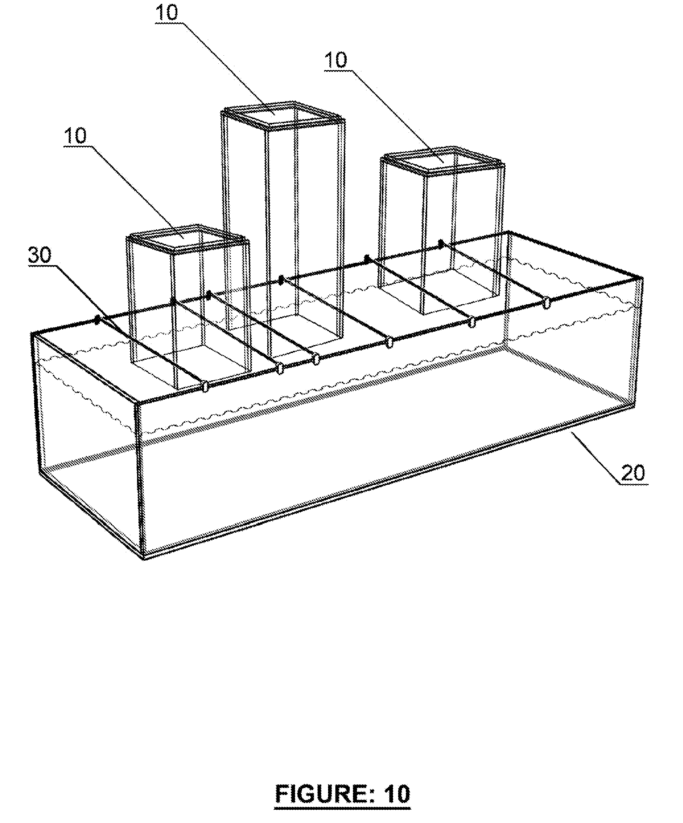

Of course the invention is not restricted to one display case per fish tank as multiple display cases can be used as shown in Figure 10 where they are restricted with a number of guide means 30.

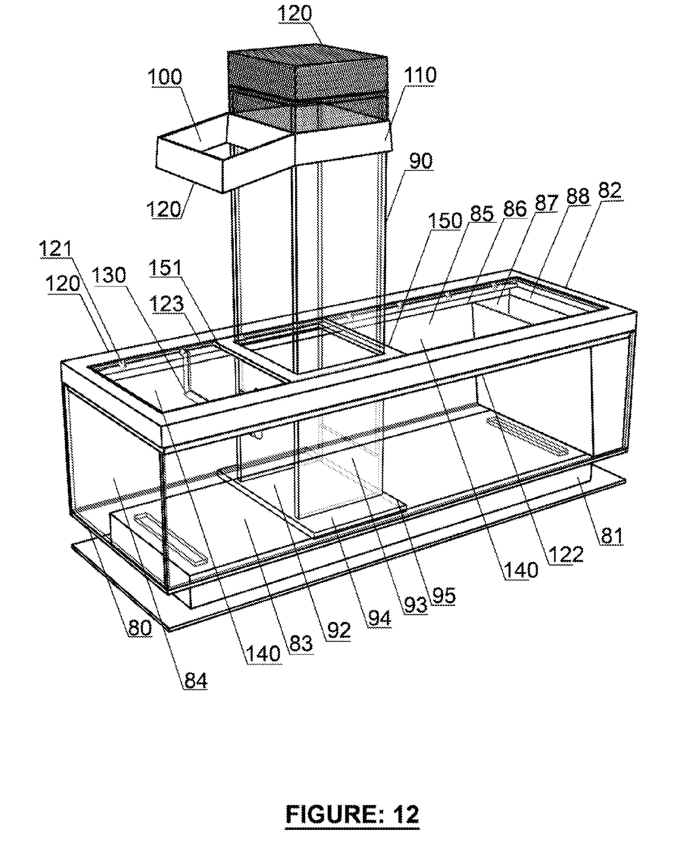

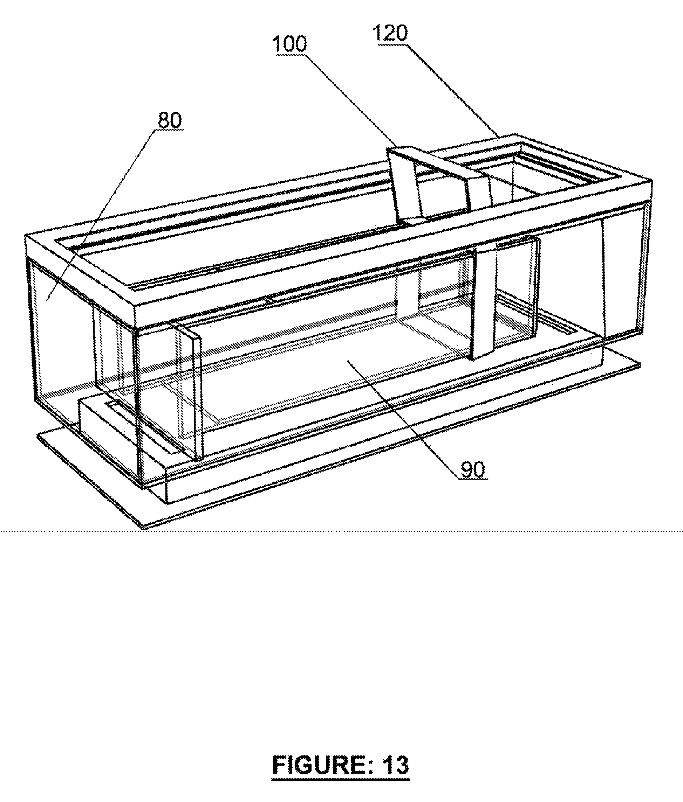

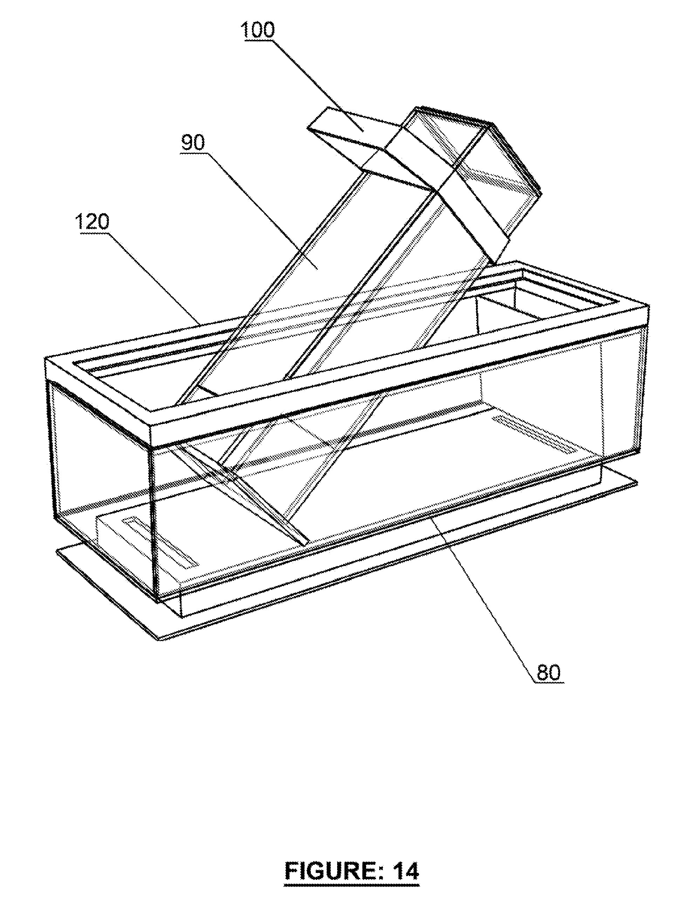

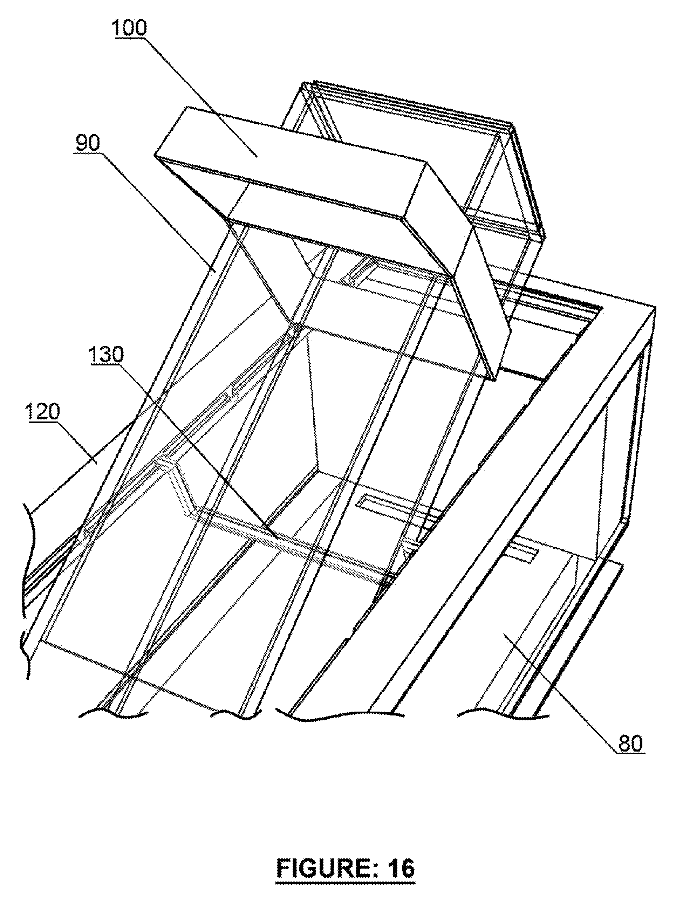

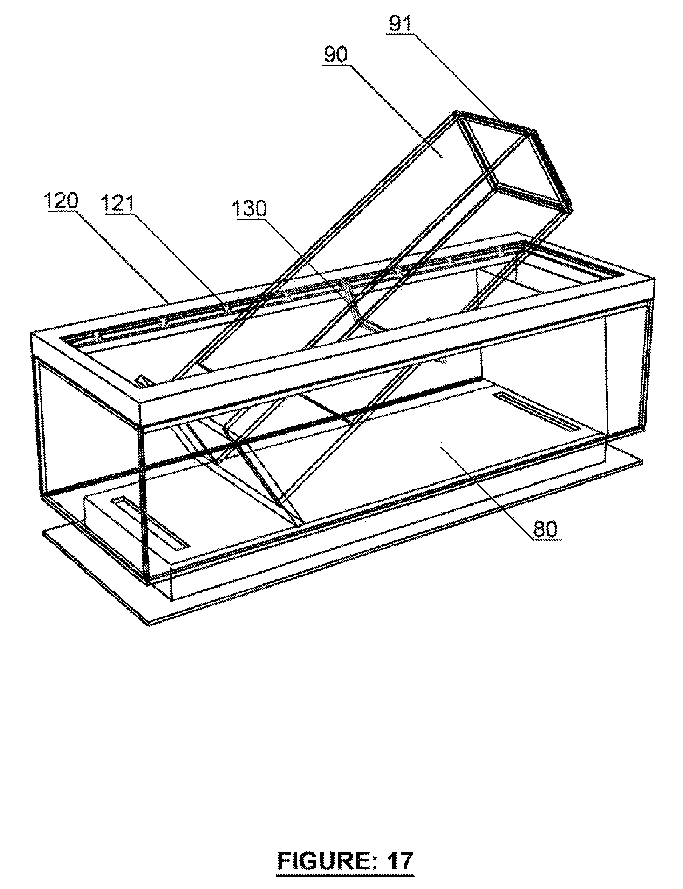

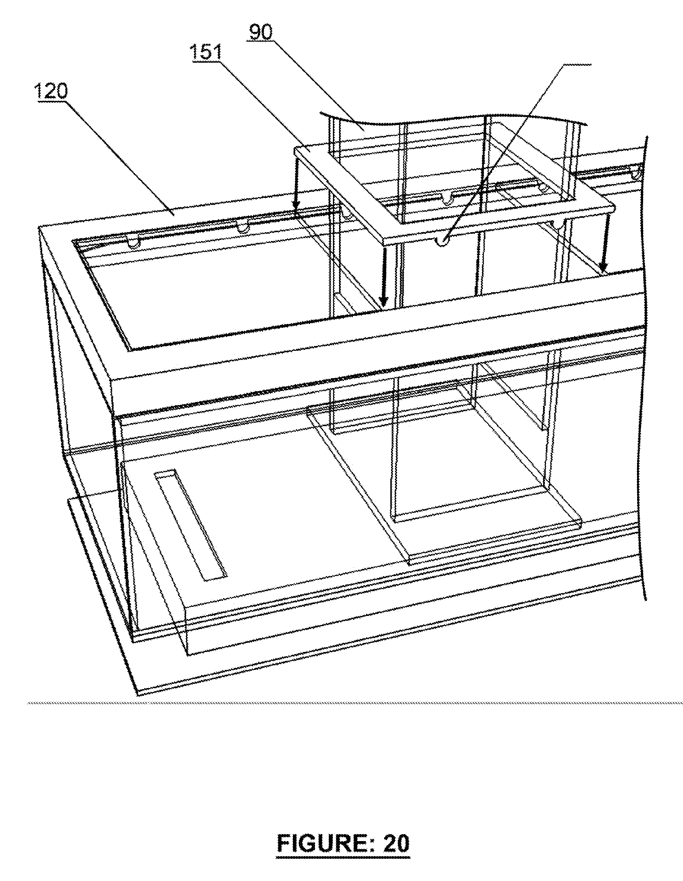

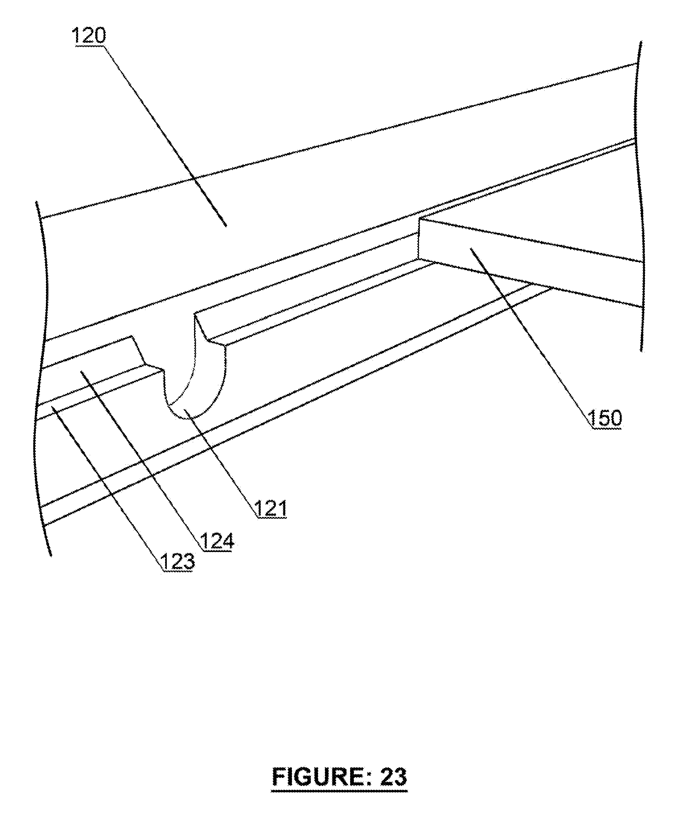

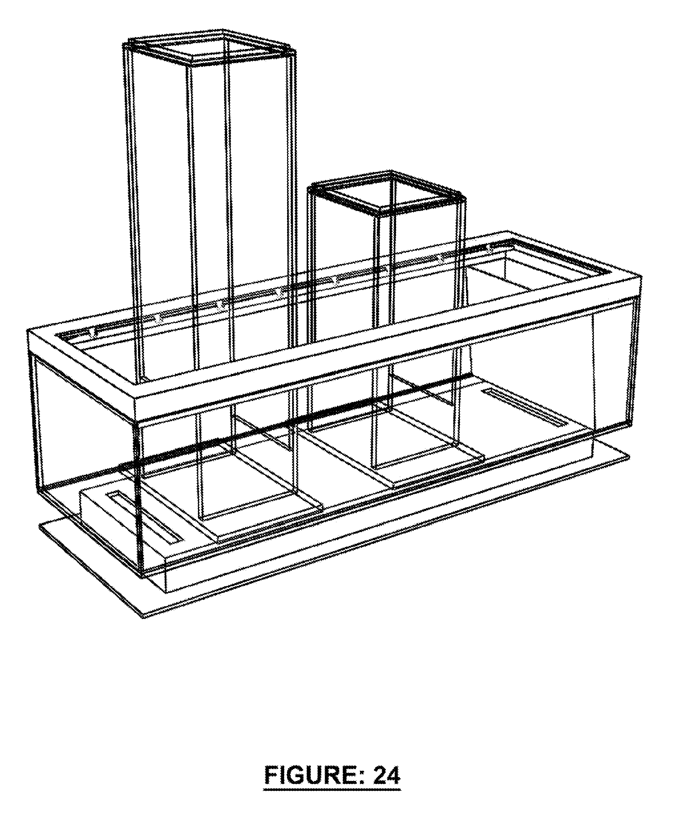

A modified embodiment of the invention is illustrated in Figures 12 to 25 of the drawings. This has many of the same features and utilises similar principles of use as the previous embodiments, comprising a tank and a display case located in the tank that can initially be placed on its side in the tank, the tank filled with water to a fill level, and then the display case raised to its final position. However the embodiment does include several further refinements which provide additional advantages.

The embodiment comprises a tank 80 with a rectangular base 81, clear vertical side walls arranged as a pair of opposed short end walls 82,83 and opposed longer side walls 84,85, and an upper rim 86 defined by the walls. It has an open top which may be covered as will be described hereinafter. The tank may be a rectangular vessel made of glass with a typical material thickness of 10mm for a vessel above about 500mm long, and 6mm for vessel below about 500mm long. Alternatively the tank could be manufactured using plastic.

A storage unit 87 maybe provided which is located inside and at one end of the tank that may be used by the user to store aquatic accessories, such as food, cleaning implements, water conditioner etc.

The Storage Unit 87 is also used to help locate a Lid 88 when that particular unit is put into place, via the inclusion of two slots that the lid drops into.
The storage unit 88 includes a lip (not shown) that drops over the end face of the tank, to adjoin the two. The top edge of the lip is preferably radiused providing a curved surface for the wires above to sit upon.

A display case, in this example in the form of a generally oblong tower 90, is also provided. It comprises a rectangular tank with a closed end 91 and the case is small enough that it can fit entirely within the base tank 80. The case is closed at both of its opposing ends with the top end closed by a cap 97. The tower cap covers the top of the tower when in place and may also house any lighting to enhance the visual aspect of the tower.

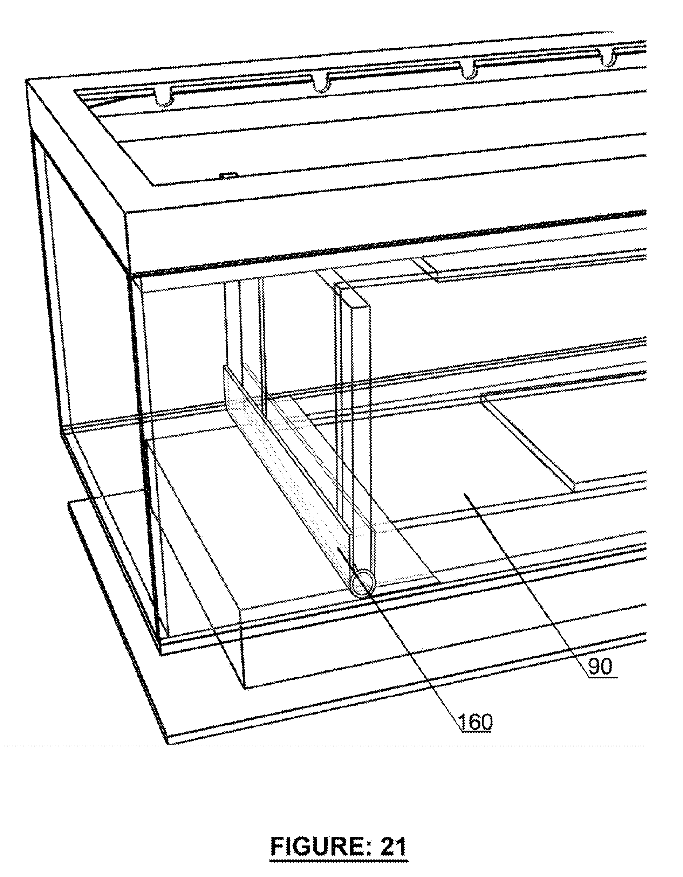

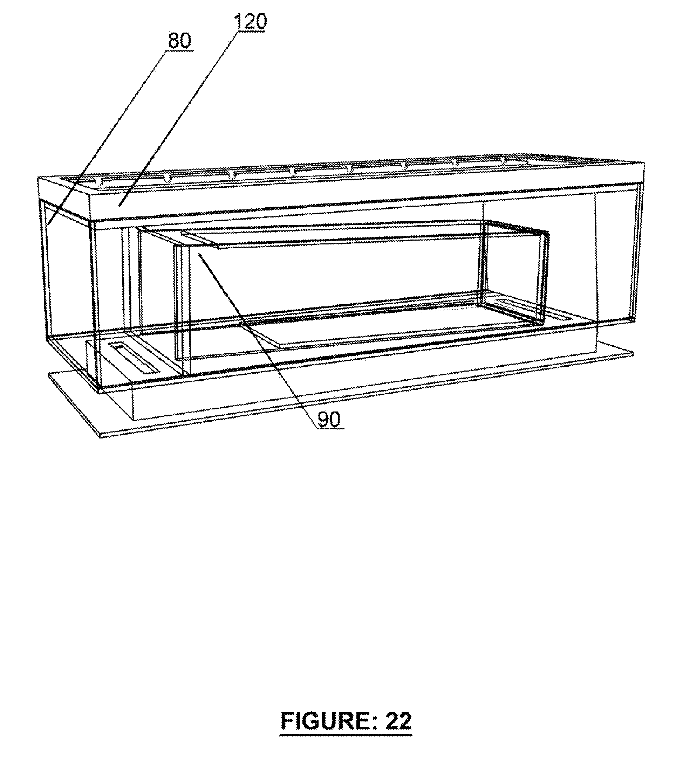

Two openings 92 and 93 are included just above the base on the two faces of the tower 90 that point up and down the main tank. One opening 93 is larger than the other one 92. Just below these openings, the base of the tower forms a closed end cap or base 94 that spreads the weight of the tower 90 over a wider surface. The base of the tower also protrudes outward toward the inner faces of the main tank to aid positioning and stability of the tower. The base 94 of the tower also has a lip 94 which protrudes outward. This ensures that when lain down inside the base tank it lies at a slight upward angle so that air pockets can escape during filling. This is best shown in Figure 22 of the drawings. It may be secured to the base of the tank by an edge of the tower engaging a hinge 160 on the base of the tank as shown in Figure 21/

The two opposing walls of the tower 90 may also be tapered by a small amount relative to one another from one end of the tower to the other (i.e. the tower in the example is not perfectly oblong), with the similar resultant effect that any bubbles trapped in the tower during filling also rise to the opening.

The edge 95 of the end cap 94 forms a pivot when lifting the tower into position and may be bevelled to allow for a smooth movement without scratching. Alternatively, that edge may be rubber dipped.

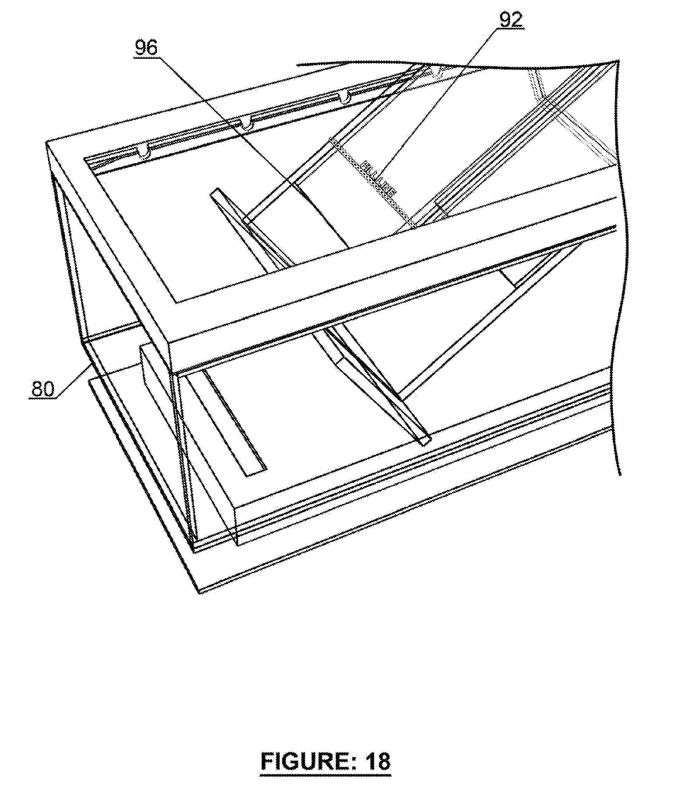

There may be a line 96 etched or scribed or otherwise provided on the face of the tower that has the smaller opening 92 (the face that faces upward when the tower is laid into the base tank). This can be seen clearly in Figure 18 of the accompanying drawings. In use as the tower is raised the line provides a guide whereby during lifting as this line reaches the level of the water in the tank 80 it provides an indication of an intermediate position during the erection of the tower 90. If the tower is raised further beyond this without topping up the water in the tank the water level will drop below the top of the smaller opening 92 causing water to escape the tower.

Alternatively a rubber bung on a line or chain may be inserted into the uppermost opening in the tower and later pulled out by the line or chain after filling, or a one way valve may be provided in the opening so water can only enter the tower through the opening 92 and not escape.

To assist in the raising of the tower 90 from a prone position below the water in the tank 80 to its final upright position a lifting collar 100 may be provided. As shown in this example the lifting collar 100 is a solid loop of plastic or other suitable material 110 that fits snugly over the closed end of the tower 90 with a handle 120 projecting above the height of the lid which is used to pull the tower into position. The lifting collar has a handle 120 that is angled to encourage the force applied during the raising of the tower. This stops the tower slipping out of the collar during lifting. Alternatively the handle 110 to the collar can be hinged to allow an angle of less than 90 degrees. The handle can be either a single shaft (like a paint brush) or a loop (like a luggage handle). The lifting collar may also duplicate as a fish net with the collar forming a neck of a mesh net 120.

The aperture within the loop 110 that fits over the tower 90 preferably also have a slight angle outward. This is to help in placing the loop over the Tower, and also make it difficult for the display case 90 to slip out of the collar during lifting.

Alternatively the lifting collar may comprise a flexible loop of non-stretching rubber or similar non-slip material which may be looped around the closed end of the tower and used to pull that end above the water. The loop may be positioned around the end of the tower before the base tank is filled with water and may locate on a ridge. The lifting collar may have a self-tightening knot or loop for safety

As shown in Figure 12, the complete assembly includes a rim cover120 that fits over the upper rim of the Main Tank 80 and Stowage Unit 88 leaving a central opening through which the inside of the tank can be accessed. This rim and serves several purposes.

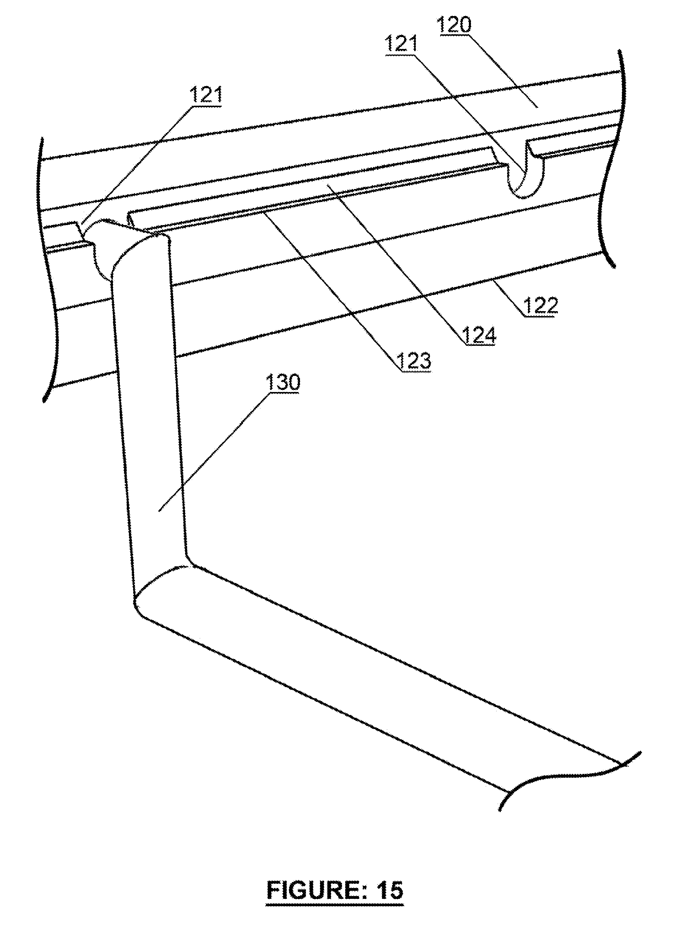

The first is to assist in raising the tower into position. The rim cover 120 has several recessed grooves of notches 121 spaced along opposing long edges that allow a support bar 130 to be placed under the tower to hold the tower in its intermediate position whilst the Main Tank is refilled. This can be seen in Figure 15 of the accompanying drawings.

The bottom edge 122 of the rim cover 120 also extends down below the upper rim of the tank 80 to provide a water fill indicator mark. This is the level at which the user should maintain the Main Tank's water level.

The central open aperture in the rim cover 120 is sufficiently large to allow the Tower 90 and the Support Collar 100 around it, to be raised up through the opening during lifting.

The rim cover 120 may also house lighting (not shown) for the Tank along two elongate channels on each side.

The rim over also includes a grooved ridge 123 which forms the long side edges of the central recess which is recessed downward from the top surface of the rim cover 120. This ridge provides a support for one or more infill Panels 140 to sit upon, and lie flush with the Lid's top surface.

An angled groove or lip 124 is included around the entire inner opening of the rim cover 120 to offset the Infill Panels. This is to allow an air gap between the Infill Panels and the rim cover 120. The rim cover and the infill panels together form a lid for the tank.

At each end of the rim cover, a sloped channel is included allowing for a finger press onto an adjacent infill panel. This raises the opposing end of the infill panel enabling ease of removal.

The support member 130 in the example is a rigid rod that is placed across the width of the rim cover into any of the available grooves 121 down each side. The rod 130 acts as a support for the tower in its intermediate position(s) when filling the tank, allowing the user to refill the Main Tank 80. The rod 130 may have a round cross-sectional profile as shown.

The grooves 121 in the rim cover 120 are of a depth such that the centre of the rod profile sits below the top of the tank, ensuring that the rod does not move out of position due to a lateral resultant force when the tower is resting on the rod during intermediate filling.

The support member 130 drops down within the tank to form a 'C' shape, allowing the tower to be supported at a lower height. An optional rubber U-Strip may be placed over the Support Bar to minimise the possibility of damage to the tower from the Support bar and also to provide a non-slip surface for the tower to rest on, ensuring the tower does not slip when being supported.

One of the infill pieces 150 which can be considered to form a lid for the tank has an open aperture 151 within it just larger than the shaft of the tower. When the tower 90 is in position the hollow infill piece 150 is dropped into position over the tower to stabilise the tower and prevent it from tipping. The hollow infill piece includes dependent lugs 152 which fit into respective grooves 121 in the rim cover 120, providing additional lateral stability.

The Lid Infills 140 allow access to the water surface when the tank is fully assembled (for example to inspect the contents of the tank, for feeding fish or for cleaning) and to the pump and paraphernalia housing. If the infill pieces above the water are transparent or translucent they also enhance the aesthetic properties of the assembly.

The Infills may be all the same size or different sizes, depending on the specific dimensions of the base tank and tower and the optional final positioning of the tower. Alternatively, a locking-collar and one or more infill pieces could be combined to form a single part.

Suitable instructions for a method of assembly of the apparatus shown in Figures 12 to 24 is as follows. The instructions below are for full assembly to a condition that sees one tower at the opposite end to the paraphernalia housing (i.e. pump). However the same approach can be used to erect the tower at the pump end of the tank. Additionally, once the tower is in position, the process can be repeated to erect a second, shorter tower at the other end to the first tower.

First all components are unpacked, ready to-hand and clean. The pedestal is positioned in its desired location on a flat surface offering sufficient support for the tank. The proximity of a mains sockets for lighting, pumps and filters should be considered. The base tank 80 is positioned on the pedestal and the tower 90 is lain down inside the base tank: the end with the openings should be at the opposite end to the paraphernalia housing, with the smaller of the two openings facing upward (Therefore the larger opening will be facing downward and the tower will be at a slight angle due to the protrusion of the end cap surface). The lifting collar 100 is then slipped over the closed end of the tower 90 and secured, perhaps making use of a ridge formed on the tower. This step can also be taken earlier i.e. before placing the tower into the base tank. The rim cover 120 is then placed onto the top rim of the base tank 80 and paraphernalia housing. If the non-rigid version of the lifting collar is used it is draped over the edge of the tank to keep it out of the water. The base tank 80 can then be filled from a clean jug or other vessel until the water level reaches the bottom edge of the lid cover 120.

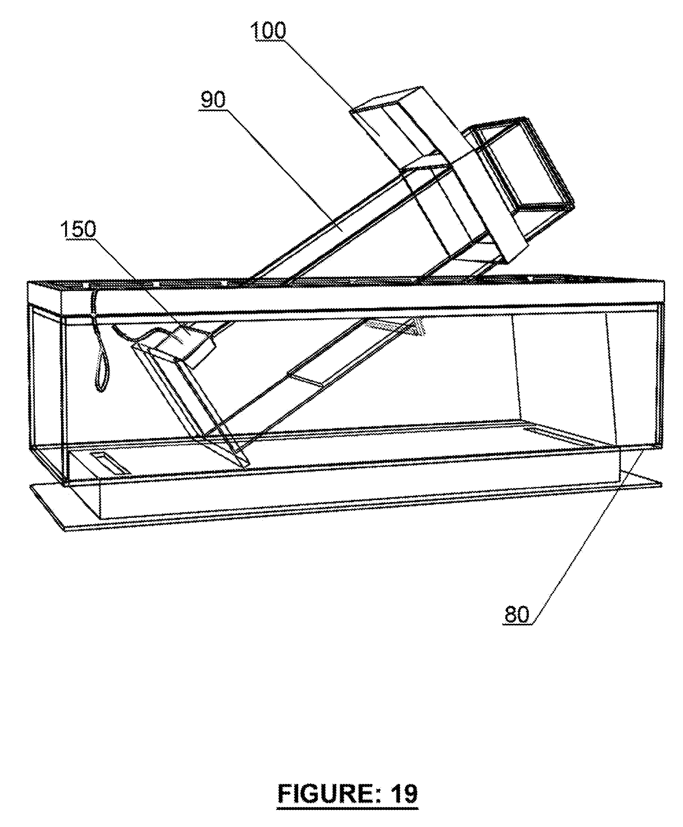

The lifting collar 100 may then used to pull the top of the tower upward, thereby rotating the tower about the point that the protruding edge makes contact with the base tank. The top end of the tower 90 is lifted upward until the top of the smaller opening 92 at the bottom of the tower is just below water level (which will have dropped). Alternatively a line scribed onto a face of the tower indicates this position by virtue of it being at water level. At this point the support rod 130 is moved along from the end of the paraphernalia housing toward the tower 90 until it locates in a pair of opposing ridges 121 such that the tower 90 can be gently lowered slightly to rest on the support rod 130 to free the hands for the next stage of filling. In a further alternative shown in Figure 19 a lug 150 may be used to fill the opening so it can extend above the water level in the tank 80.

The water level is then topped-up to reach the level indicated by the bottom edge of the rim cover 120. The tower 90 is then rotated further and the above steps repeated until the tower 90 is vertical. The number of intermediate filling steps is dependant upon the specific geometry of the tower and base tank.

Care should be taken to ensure that the top opening 92 on the bottom of the tower does not rise above the level of the water surface. If this does happen, air will enter the tower and the tower will need to be lowered back into the tank and the process restarted. If the instructions are followed however this will not happen.

When the tower 90 is vertical, the support rod 130 and lifting collar 100 can be removed and stored for disassembly and the infill pieces and tower cap put in place. The hollow infill piece locates, once dropped over the tower, locks/mates/matches with the ridges in the lid (as per the support rod) such that it cannot be moved laterally without lifting and sliding up along the tower.

The tower can be subjected to adjustments in position by rotating and sliding the tower, keeping it upright. The effective seal formed by two relatively large flat surfaces pressed together by the mass of water in the tower above the level of water in the base tank means that tipping the tower is very difficult. The tower can be positioned anywhere along the base tank, but there are only certain positions that will allow the hollow infill piece to mate with the ridges and also allow the other infill pieces to be put into position to finish the assembly. The assembly is complete and it is now time to prepare the environment for the chosen species of fish or other aquatic life forms.

For disassembly, all fish / life forms should be safely removed. All furniture and gravel should be removed so that only water remains in the base tank and the tower. The tower cap and lid are removed. A jug is used to scoop water out of the base tank. As the water level inside the base tank drops below the openings of the tower, air will enter the tower, there will be a loud glugging noise and the level of water in the base tank will rise. This can be expected and is even fun. The water will never rise much above the level of the larger opening on the base of the tower and there is therefore no risk of flooding. When there ceases to be glugging upon scooping more water out of the base tank, the tower can be lifted out.

Although the present invention has been illustrated and described with respect to exemplary embodiment thereof, it should be understood by those skilled in the art that the foregoing and various other changes, omission and additions may be made therein and thereto, without departing from the scope of the invention. Therefore the present invention should not be understood as limited to the specific embodiment set out above but to include all possible embodiments which can be embodied within a scope encompassed and equivalent thereof with respect to the features set out in the appended claims.

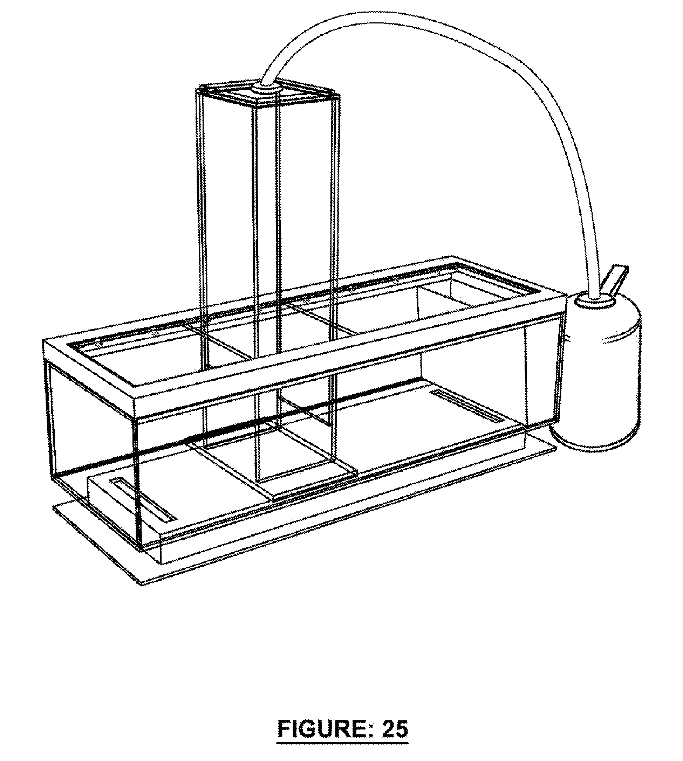

As an example of a possible alternative arrangement, Figure 25 shows how the display case can be filled by connecting a pipe to a one way valve at the top of the case, the pipe being connected to a source of low pressure, by which we mean a below atmospheric pressure, which draws the air out of the display case causing the water level to rise up the display case above the water level in the tank. In a further alternative the valve could be omitted and instead the pipe could be passed up inside the display case from below the water line in the tank so that its open end is at the top of the display case. Again this can be connected to a source of low pressure to remove the air from inside the display case.

## Claims

1. An apparatus comprising a display case and a fish tank, the fish tank defining a volume into which water is filled to a water level, the display case being of a suitable size to fit at least partially inside of the fish tank, in which the display case has an open end and a closed end, the open end being located below the water level within the tank with the closed end positioned above the water level of the fish tank with the open end providing a fluid connection between water inside of the case and water in the tank outside of the case, and in which the case contains water at a second water level higher than the water level of the tank, the water being maintained at this higher level by atmospheric pressure acting upon the surface of the water in the tank that is outside of the case.

2. An apparatus according to claim 1 in which the display case further comprises a guide means which fixes the case in its position of use relative to the tank, helping to reduce the risk of it being knocked over, or removing that risk completely, in which the guide means comprises a support collar which is provided with an opening that is complementary in shape to the cross section of the display case allowing part of the case to extend through the opening in the lid.

3. An apparatus according to claim 2 in which the support collar forms a lid, or partial lid, for the fish tank.

4. An apparatus according to any preceding claim in which the fish tank, or a part secured thereto such as a rim cover, is provided with at least one pair of notches, one each side of the tank, and part of the guide means is located within the pair of notches to securely locate it.

5. An apparatus according to claim 4 which further includes a support device which is shaped to locate within one or more of the notches, the support device supporting the display case in a partially erect position.

6. An apparatus according to claim 5 in which the support device comprises a generally U-shaped rod, the free ends of which engage the notches, the form of the U matching the form of the display case so the case sits within the U shape.

7. An apparatus according to claim 5 or 6 which further includes one or more infill panels that extend across the top of the fish tank and are supported by a ridge and in which the notches, where provided, are cut into this ridge leaving an air-gap allowing the air to pass straight through to the water.

8. An apparatus according to any preceding claim in which the base of the tank is provided with one or more locating recesses that correspond with one or more protrusions on the display case to locate the case in position.

9. An apparatus according to any preceding claim in which the base of the tank includes one or more locating ridges.

10. An apparatus according to claim in which the ridge co-operates with the case to form a pivot.

11. An apparatus according to any preceding claim in which the display case is filled by lowering it in an upright position into the tank and allowing water to enter through the open end by opening a port towards the closed end allowing air to escape as the case is filled, the port is then closed before raising the closed end above the water level, and in which the port is a one way valve to allow air to escape as the case is filled but then to prevent air entering the case as it is moved to its position of use.

12. An apparatus according to any preceding claim which includes a water level guide which comprises at least one marking, or identifiable portion designated as water level guide, which is positioned such that when upright in the tank it indicates the minimum level to which the tank should be filled with water so that the volume of water in the tank plus the maximum volume of water that can be held in the display case does not exceed the capacity of the tank.

13. An apparatus according to any preceding claim in which the display case is so constructed that when it is lying in the tank prior to being moved to the upright position its uppermost face is slanted so the free end of the case is higher than the closed end to permit any air in the case to escape.

14. An apparatus according to any preceding claim which includes a water level guide which comprises at least one marking, or identifiable portion that may be designated as water level guide, which is positioned such that during lifting of the case to its final position it indicates the minimum level of water that must be maintained in the fish tank to prevent air entering the tower as it is lifted.

15. An apparatus according to any preceding claim which includes a flat end plate on the base of the display case which, in use, engages a flat part of the base of the fish tank whereby to create surface tension when immersed within water, restricting any vertical movement of the display case.

16. An apparatus according to any preceding claim in which the display has two openings at the end that lies under water, with one extending further towards the closed upper end of the case than the other.

17. An apparatus according to any preceding claim which includes a lifting collar comprising a collar part defining a loop having an opening which can be fitted over the tower, and a handle portion extending from the collar part.

18. An apparatus according to claim 17 in which the inward facing wall of the loop is tapered to go around the display case to ensure a firm, tight grip is always maintained on the display case providing a downward force, preventing the handle from slipping off the top of the tower

19. An apparatus according to claim 17 or 18 in which the lifting collar includes a net that is fixed around its open end to the surround part such that the surround part forms the rim of the net and holds it open.

20. An apparatus according to claim 1 in which the water level inside the display case is maintained at a suitable level by balancing the weight of the water in the display case against the combined weight of the water in the fish tank and the atmospheric pressure applied to the water in the fish tank.

21. An apparatus according to any preceding claim in which the case is sized so that it fits entirely below the water level of the tank in a first, installation, position, and can be moved to its position of use filled with water without the open end coming out of the water.

22. An apparatus according to any preceding claim in which the case has no other openings through which air can enter that are above the water level.

23. An apparatus according to any preceding claim in which the case can be any of a wide variety of shapes and sizes.

24. An apparatus according to any preceding claim in which the case comprises an elongate tube, of square or circular cross section along its length which is normally positioned vertically so that it is taller than it is wide, raising the water in the tube well above the water level of the tank.

25. An apparatus according to any preceding claim in which the case has a length that is at least 50 percent greater than the depth of the water in the tank at the water level, or at least twice as great, or three times as great or more.

26. An apparatus according to claim 25 in which the fish tank is elongate with the tube almost as long as the tank when resting on its side within the tank in its first, installation, position.

27. An apparatus according to any preceding claim in which the display case further comprises a flotation element placed adjacent to the open end of the display case to aid in the flotation of the display case.

28. An apparatus according to any preceding claim in which at least part of the case at or near the closed end which in its position of use is above the water level in the tank, is transparent.

29. An apparatus according to any preceding claim in which an area adjacent the open end of the display case consists of at least one opening large enough to permit fish to swim through to access the display case.

30. An apparatus according to any preceding claim in which a light is provided at the closed end of the display case, above the water level, to illuminate the water in the case.

31. An apparatus according to any preceding claim in which a support is provided which supports the case in a position of use spaced above the base of the tank.

32. An apparatus according to claim 31 in which the support is height adjustable to vary the amount by which the closed end of the tank protrudes above the water level of the tank.

33. An apparatus according to claims 31 or claim 32 in which the support includes one or more adjustable legs which extend downwards from the display case.

34. An apparatus according to claim 33 in which the legs of the support comprise screw type height adjustors which pass through threaded openings in a base plate of the support or a part of the display case and extend downwards towards the base of the tank.

35. An apparatus according to claim 33 in which each leg comprises a ram which can be lengthened or shortened by a suitable means, such as a pneumatic or hydraulic drive, provided to permit adjustment of height.

36. Apparatus according to any preceding claim in which the display case is filled with water through the open end by totally submerging it below the water level of the tank on its side to allow air to escape as water enters before moving it to its position of use.

37. Apparatus according to any preceding claim in which the fish tank comprises either an indoor tank or an outdoor pond.

38. A combination of a display case and a fish tank which is suitable for use with a fish tank to provide the apparatus of any one of claims 1 to 37.

39. A method of providing a display case for a fish tank, the fish tank defining a watertight volume into which water is filled to a water level, the display case being of a suitable size to fit inside of the fish tank, in which the display case has an open end and a closed end, the method comprising:
at least partially submerging the display case below the water level of the tank,
allowing the display case to fill with water from the tank;
placing the display case inside the fish tank in an installation position such that the open end is below the water level until water has at least partially filled the case from the water in the tank;
moving the display case to a use position with the open end remaining below the level of water in the tank and the closed end raised above the level of water in the tank such that at least some water in the case is held at a level above the water in the tank by atmospheric pressure acting down on the water in the tank.

40. A method according to claims 39 which comprises locating the righted case using a guide means to hold it in place and in which the guide means comprises a collar, such as lid for the tank, with an opening and the method comprises fitting the guide means onto the tank such that the case protrudes at least partially through the opening in the guide means.

41. A method according to claim 40 which comprises submerging the case below the water line on its side, and the moving the case from the installation to the use position by pivoting the case about a region of the base of the tank until it is upright.

42. A method according to claims 40 or 41 where once filled the case is raised above the base of the tank after it has been moved to the upright position.

43. A method according to claims 40 to 42 which comprises placing the righted case on a support and raising the case by adjusting the position or height of the support.

44. A method according to claim 40 which comprises adding fish to the tank before, during, or after the installation of the display case.

45. An apparatus substantially as described herein, with reference to and as illustrated in the accompanying drawings.

46. A method of providing a display case for a fish tank substantially as described herein, with reference to and as illustrated in the accompanying drawings.

47. A lifting collar for use in combination with a display case for a fish tank which comprises a collar part defining a loop, which may be a closed loop, having an opening which can be fitted over the display case, and a handle portion extending from the collar.

48. A lifting collar according to claim 47 which includes a net which is secured around the collar.
